(19) **Europäisches Patentamt**
**European Patent Office**
**Office européen des brevets**

(11) **EP 3 633 548 B1**

(12) **FASCICULE DE BREVET EUROPEEN**

(45) Date de publication et mention
de la délivrance du brevet:
**18.06.2025 Bulletin 2025/25**

(51) Classification Internationale des Brevets (IPC):
**G06F 18/2413** *(2023.01)* **G06V 10/44** *(2022.01)*
**G06V 10/764** *(2022.01)*

(21) Numéro de dépôt: **19306260.1**

(52) Classification Coopérative des Brevets (CPC):
**G06V 10/454; G06F 18/24143; G06V 10/764**

(22) Date de dépôt: **02.10.2019**

(54) **PROCÉDÉ DE CLASSIFICATION SÉCURISÉE D'UNE DONNÉE D'ENTRÉE AU MOYEN D'UN RÉSEAU DE NEURONES À CONVOLUTION**

GESICHERTES KLASSIFIZIERUNGSVERFAHREN VON EINGANGSDATEN MITTELS EINES NEURONALEN NETZWERKES MIT KONVOLUTION

METHOD FOR SECURE CLASSIFICATION OF INPUT DATA BY MEANS OF A CONVOLUTIONAL NEURAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2018 FR 1859203**

(43) Date de publication de la demande:
**08.04.2020 Bulletin 2020/15**

(73) Titulaire: **IDEMIA Public Security France**
**92400 Courbevoie (FR)**

(72) Inventeurs:
• **DESPIEGEL, Vincent**
**92400 Courbevoie (FR)**
• **CHABANNE, Hervé**
**92400 Courbevoie (FR)**

(74) Mandataire: **IPS**
**2, place Samuel de Champlain**
**92400 Courbevoie (FR)**

(56) Documents cités:
• DWORK CYNTHIA ET AL: "Calibrating Noise to Sensitivity in Private Data Analysis", 4 March 2006, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 265 - 284, ISBN: 978-3-642-17318-9, XP047422635
• KHALIL-HANI MOHAMED ET AL: "A convolutional neural network approach for face verification", 2014 INTERNATIONAL CONFERENCE ON HIGH PERFORMANCE COMPUTING & SIMULATION (HPCS), IEEE, 21 July 2014 (2014-07-21), pages 707 - 714, XP032646463, ISBN: 978-1-4799-5312-7, [retrieved on 20140918], DOI: 10.1109/HPCSIM.2014.6903759
• NICOLAS PAPERNOT ET AL: "Semi-supervised Knowledge Transfer for Deep Learning from Private Training Data", CORR (ARXIV), vol. 1610.05755v4, 3 March 2017 (2017-03-03), pages 1 - 16, XP055549005

- **DWORK CYNTHIA ET AL: "Our Data, Ourselves: Privacy Via Distributed Noise Generation", 28 May 2006, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 486 - 503, ISBN: 978-3-642-17318-9, XP047422734**

**Description**

DOMAINE TECHNIQUE GENERAL

La présente invention concerne le domaine de la biométrie, et en particulier un procédé de classification sécurisée d'une donnée d'entrée au moyen d'un réseau de neurones à convolution, pour authentification/identification.

ETAT DE L'ART

Les réseaux de neurones sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

On connait tout particulièrement une utilisation des CNN dans le domaine policier et antiterroriste. Plus précisément, des forces de polices disposent de bases de données de photographies par exemple des visages d'individus impliqués dans des affaires. Il est alors possible d'entraîner des CNN à reconnaitre des visages dans des données de vidéo-surveillance, en particulier pour détecter des individus recherchés. Similairement on peut imaginer que des gouvernements disposent de bases de données biométriques par exemple de empreintes digitales de passeports. Il est alors possible d'entraîner des CNN à reconnaitre les empreintes d'individus en particulier.

Aujourd'hui, une problématique qui se pose est que ces bases de données sont confidentielles, et restreintes (en particulier nationales). Or il serait souhaitable par exemple que les forces de police de plusieurs états coopèrent et améliorent l'efficacité globale de la reconnaissance, sans pour autant que l'on puisse remonter aux données confidentielles.

Cependant cela impliquerait dans tous les cas qu'une entité (par exemple les forces de police d'un état) fassent apprendre leurs CNN sur les bases de données d'une autre entité (les forces de police d'un autre état), i.e. se transmettent en clair les bases de données de photographies ou d'autres traits biométriques, ce qui n'est pas envisageable aujourd'hui.

Il a été proposé dans la demande FR1852351 une solution astucieuse permettant malgré la non-existence d'un espace commun de représentation de faire apprendre des « professeurs » sur chacun des sets de données confidentiels, de sorte à pouvoir entrainer conjointement un « étudiant » qui in fine disposera de la connaissance des divers sets de données confidentielles.

Plus précisément, les professeurs vont générer une base de données d'apprentissage pour l'étudiant en classifiant des données publiques brutes grâce à un système de « vote » des professeurs, le cas échéant bruité pour éviter de pouvoir remonter aux sets individuels de données confidentielles ayant servi à l'apprentissage des professeurs.

Une telle technique apporte entière satisfaction, mais pourrait être encore simplifiée.

Un autre document de l'art antérieur est: DWORK CYNTHIA ET AL: "Calibrating Noise to Sensitivity in Private Data Analysis", 4 mars 2006 (2006-03-04), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 265 - 284, XP047422635, ISBN: 978-3-642-17318-9.

PRESENTATION DE L'INVENTION

Selon un premier aspect, la présente invention concerne un procédé de classification sécurisée d'une donnée biométrique d'entrée au moyen d'un réseau de neurones à convolution, CNN, le procédé comprenant la mise en œuvre par des moyens de traitement de données d'au moins un équipement, d'étapes de :

(a) Détermination, par application dudit CNN à ladite donnée biométrique d'entrée, d'un premier vecteur de classification de ladite donnée biométrique d'entrée associant à chacune d'une pluralité de classes potentielles un score entier représentatif de la probabilité d'appartenance de ladite donnée biométrique d'entrée à la classe potentielle, le premier vecteur correspondant à un vecteur possible parmi un premier ensemble fini et dénombrable de vecteurs possibles, chaque vecteur possible du premier ensemble associant à chacune de la pluralité de classes potentielles un score entier tel que lesdits scores du vecteur possible constituent une composition d'une valeur totale entière prédéfinie ;

(b) Construction à partir du premier vecteur d'un deuxième vecteur de classification de ladite donnée biométrique d'entrée, tel que le deuxième vecteur appartienne également au premier espace de vecteurs possibles et présente une distance avec le premier vecteur selon une fonction de distance donnée égale à une distance de référence non-nulle ; et renvoi du deuxième vecteur comme résultat de la classification sécurisée.

Selon d'autres caractéristiques avantageuses et non limitatives :

- lesdites données sont des images de visages ;
- le procédé est un procédé d'authentification ou d'identification d'un individu, ladite donnée biométrique d'entrée étant acquise sur l'individu ;
- l'étape (b) comprend une sous-étape (b1) de sélection d'un troisième vecteur dans un deuxième ensemble fini et dénombrable de vecteurs d'erreur, chaque vecteur d'erreur du deuxième ensemble associant à chacune d'une pluralité de classes potentielles un score entier relatif tel qu'une somme desdits scores du vecteur d'erreur est nulle, et présentant une distance avec le vecteur nul selon la fonction de distance donnée égale à ladite distance de référence non-nulle ; et une sous-étape (b2) de construction du deuxième vecteur comme somme du premier vecteur et du troisième vecteur ;
- l'étape (b) comprend une sous-étape préalable (b0) de construction dudit deuxième ensemble en fonction de ladite distance de référence ;
- l'étape (b0) comprend la sélection aléatoire de ladite distance de référence ;
- la sélection dudit troisième vecteur dans le deuxième espace est aléatoire ;
- ladite sélection aléatoire dudit troisième vecteur n'est pas uniforme, et est mise en œuvre en fonction du premier vecteur en utilisant une base de données biométrique témoin de sorte à reproduire un bruit réaliste ;
- ladite fonction de distance est la norme L1, ladite distance de référence étant entière ;
- le procédé comprenant une étape (a0) d'apprentissage, à partir d'une base de données biométrique confidentielles d'apprentissage déjà classifiées, des paramètres dudit CNN.

Selon un deuxième et un troisième aspect, l'invention propose un produit programme d'ordinateur comprenant des instructions de code pour l'exécution d'un procédé selon le premier aspect de classification sécurisée d'une donnée biométrique d'entrée au moyen d'un réseau de neurones à convolution ; et un moyen de stockage lisible par un équipement informatique sur lequel un produit programme d'ordinateur comprend des instructions de code pour l'exécution d'un procédé selon le premier aspect de classification sécurisée d'une donnée biométrique d'entrée au moyen d'un réseau de neurones à convolution.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en œuvre des procédés selon l'invention

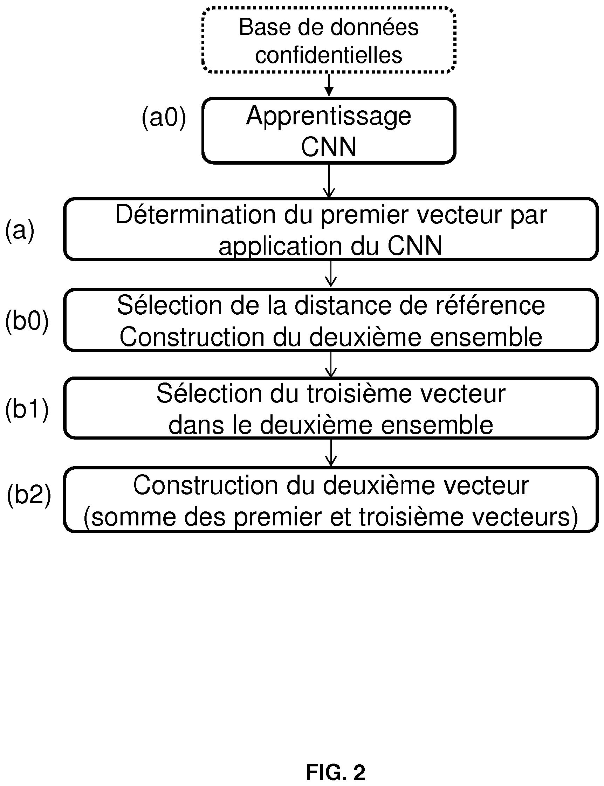

- la figure 2 représente schématiquement les étapes du procédé de classification sécurisée selon l'invention

DESCRIPTION DETAILLEE

*Principe*

La présente invention propose un procédé de classification d'une donnée d'entrée utilisant au moins un CNN préalablement appris sur une base de données d'apprentissage, en particulier confidentielle.

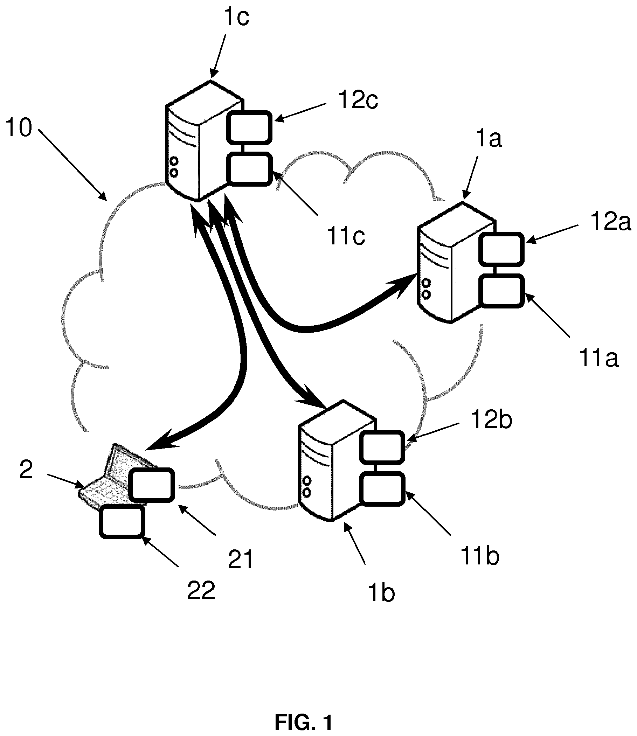

Ce procédé est mis en œuvre au sein d'une architecture telle que représentée par la **figure 1,** grâce à un ou plusieurs serveurs 1a, 1b, 1c et/ou un terminal 2.

Au moins un des serveurs 1a, 1b, 1c stocke une base de données confidentielles d'apprentissage, i.e. un ensemble de données déjà classifiées (par opposition aux données dites d'entrée que l'on cherche justement à classifier). De façon préférée, on a au moins deux bases de données confidentielles d'apprentissage déjà classifiées, stockées sur deux serveurs distincts (1a et 1b dans la figure 1), sans interactions : le serveur 1a n'a pas accès à la base du serveur 1b et vice-versa.

Les serveurs constituent des entités indépendantes. Il s'agit par exemple de bases de données de forces de police nationales de deux états.

En effet, les données d'entrée ou d'apprentissage sont avantageusement représentatives d'images (ladite classification étant une reconnaissance d'objet, de visage, etc.) ou de toute autre données biométriques (reconnaissance d'empreintes digitales, de données d'iris, etc.), on comprendra que le visage est un exemple de donnée biométrique. La classification est alors une identification/authentification d'un individu sur lequel est acquise la donnée d'entrée, par exemple filmée par une caméra de surveillance (les classes correspondent à des individus connus).

De nombreux modes de réalisation sont possibles. Selon un premier mode de réalisation, chaque serveur 1a, 1b est capable de gérer un classifieur sur sa propre base de données, i.e. d'apprendre un CNN dédié, et d'utiliser le CNN pour classification d'une donnée transmise par exemple depuis le terminal 2, qui a typiquement un rôle de client. On suppose en cas de pluralité de CNN qu'on dispose d'un modèle commun de classes, i.e. qu'une liste exhaustive de classes potentielles est prédéfinie. A noter que le ou les CNN appris peuvent être embarqués sur le terminal 2 pour mise en œuvre directe du procédé de classification par ce dernier.

Selon un deuxième mode, on peut recourir à un mécanisme de professeur/étudiant pour apprendre un CNN « commun » à toutes les base de données. Pour cela, le serveur 1c est avantageusement un serveur optionnel qui ne dispose quant à lui pas de base de données d'apprentissage et qui peut justement être dévolu à cette tâche, voir en particulier la demande FR1852351 évoquée précédemment. A noter que le rôle de ce serveur 1c peut tout à fait être accompli par l'un ou l'autre des serveurs 1a, 1b, mais de façon préférée c'est un serveur distinct (i.e. cloisonné) pour éviter tout risque de divulgation des bases de données confidentielles des serveurs 1a, 1b. A nouveau, le terminal 2 peut requérir la classification en transmettant la donnée d'entrée, ou embarquer le CNN commun et mettre directement le procédé de classification.

On comprendra que la présente invention n'est pas limitée à une pluralité de bases de données, il suffit juste que l'on ait au moins une entité apte à apprendre les paramètres d'au moins un CNN à partir d'au moins une base de données (en particulier confidentielles) d'apprentissage déjà classifiées. Dans le cas de plusieurs CNN, le présent procédé pourra juste être mis en œuvre autant de fois qu'il y a de CNN.

Le ou les CNN pourront avoir n'importe quelle architecture connue de l'homme du métier, et l'apprentissage pourra être mis en œuvre de n'importe quelle manière connue.

Dans tous les cas, chaque équipement 1a, 1b, 1c, 2 est typiquement un équipement informatique distant relié à un réseau étendu 10 tel que le réseau internet pour l'échange des données. Chacun comprend des moyens de traitement de données 11a, 11b, 11c, 21 de type processeur, et des moyens de stockage de données 12a, 12b, 12c, 22 telle qu'une mémoire informatique, par exemple un disque.

*Procédé de classification*

Mathématiquement, on considère $n \geq 1$ entitiés qui chacune :

- doit répondre à une classification suivant $m$ classes prédéfinies ($m$ est généralement grand, en particulier en biométrie),
- a un nombre $l$ de « points » à répartir suivant ces $m$ classes (typiquement, $l = 100$, pour raisonner en pourcentage),

Ainsi, la classification peut, plutôt qu'une simple réponse binaire, graduer les réponses pour obtenir des nuances que l'on pourra exploiter en sachant aussi quelles sont les classes les plus proches, voir le document Geoffrey Hinton, Oriol Vinyals, Jeff Dean: Distilling the Knowledge in a Neural Network. NIPS 2014. Cela signifie simplement que là où une classification classique détermine LA classe qu'il estime être celle d'une donnée d'entrée (par exemple le nom de la personne en photo), la présente classification peut indiquer une ou plusieurs classes potentielles.

On définit ainsi un vecteur de classification, de taille $m$, noté par exemple $o = (o_1, o_2, \ldots, o_m)$: la ième valeur $o_{i,i \in \llbracket 1;m \rrbracket}$ du vecteur est le score associé à la ième classe. On a $l = \sum_{i=1}^{m} o_i$.

Par exemple, pour une donnée d'entrée, une première classe peut se voir attribuer 90 points, une deuxième classe 0 points, et une troisième classe 10 points : cela signifie qu'on est sûr que la donnée d'entrée n'est pas de la 2e classe, et a priori de la 1ère classe, mais il reste 10% de chances qu'elle soit en fait de la 3e classe.

Le nombre de points associé à chaque classe potentielle est appelé « score » et dans le cadre de la présente invention il s'agit d'un entier (un entier « naturel », c'est-à-dire un entier positif ou nul, appartenant à $\mathbb{N}$), et non par exemple d'un pourcentage comme on pouvait le trouver dans l'état de l'art. Similairement, le nombre total de points, appelé « valeur totale » est un autre entier (naturel), par exemple au moins 10, voire entre 20 et 200, voire entre 50 et 150, et préférentiellement 100.

On comprendra bien entendu que les scores ou la valeur totale peuvent être entier « à un facteur près ». Par exemple, on resterait bien entendu dans la portée de la présente invention en choisissant des scores multiples de 0.5 : on pourrait multiplier tous les scores par deux, ainsi que la valeur totale, pour revenir à des scores multiples de 1, et donc entiers.

La classification peut être vue comme la détermination d'un vecteur de classification de ladite donnée d'entrée associant à chacune d'une pluralité de classes potentielles un score entier représentatif de la probabilité d'appartenance de ladite donnée d'entrée à la classe potentielle.

Être à valeur dans $\mathbb{N}$ fait que les différents scores associés aux classes potentielles constituent ce que l'on appelle une « composition » de la valeur totale $l$.

En combinatoire, une composition d'un entier positif $N$ est une représentation de cet entier comme somme d'une suite d'entiers strictement positifs. Plus précisément, il s'agit d'une suite de $k \geq 1$ entiers strictement positifs appelés « parts ». Ainsi, (1,2,1) est une composition de 4=1+2+1. Deux suites qui diffèrent par l'ordre de leurs parts sont considérées comme des compositions différentes. Ainsi, (2,1,1) est une autre composition de l'entier 4. On pourra se référer par exemple au document Silvia Heubach, Toufik Mansour, Compositions of n with parts in a set.

Les huit compositions de 4 sont : (4) ; (1,3) ; (3,1) ; (2,2) ; (1,1,2) ; (1,2,1) ; (2,1,1) ; (1,1,1,1).

Les compositions diffèrent donc des partitions d'entiers qui considèrent des suites sans tenir compte de l'ordre de leurs termes. Par exemple, on a seulement cinq partitions entières de 4.

La propriété principale est que le nombre de compositions d'un entier $N$ est égal à $2^{N-1}$, et donc est fini et dénombrable. On peut donc définir un premier ensemble fini et dénombrable de vecteurs de classification possibles, chaque vecteur possible du premier ensemble associant à chacune de la pluralité de classes potentielles un score entier tel que lesdits scores du vecteur possible constituent une composition de la valeur totale entière prédéfinie

Dans une première étape (a), le procédé comprend la détermination, par application dudit CNN à ladite donnée d'entrée, d'un premier vecteur de classification de ladite donnée d'entrée associant à chacune d'une pluralité de classes potentielles un score entier représentatif de la probabilité d'appartenance de ladite donnée d'entrée à la classe potentielle, le premier vecteur correspondant à un vecteur possible parmi ledit premier ensemble fini et dénombrable de vecteurs possibles.

En d'autres termes, on utilise normalement le CNN pour obtenir une classification.

On comprend comme expliqué que ce premier vecteur pourrait révéler des informations sur la ou les bases de données d'apprentissage, ce qui à proscrire si la base est confidentielle.

Le présent procédé propose d'utiliser astucieusement des mécanismes dit de confidentialité différentielle (en anglais « differential policy ») en se basant sur les propriétés de la composition.

La confidentialité différentielle a traditionnellement été utilisée pour les bases de données « anonymisées ». Elle vise à définir une forme de protection de résultats de requêtes faites à ces bases de données en minimisant les risques d'identification des entités qu'elle contient, si possible en maximisant la pertinence des résultats de la requête. Il a par exemple été montré dans le document « Differentially Private Password Frequency Lists, 2016, https://eprint.iacr.org/2016/153.pdf » comment obtenir des listes de fréquence bruitées de mots de passe utilisés par des serveurs, de sorte à pouvoir les publier en toute sécurité.

Dans le présent procédé, on propose ainsi de renvoyer non pas le premier vecteur de classification, mais un deuxième vecteur différent pour protéger la confidentialité. Le deuxième vecteur constitue une classification « bruitée », qui doit être suffisamment éloignée pour minimiser les risques de compromission de la base de données, mais suffisamment proche pour que ce deuxième vecteur reste fiable, i.e. que les scores qu'il contient restent représentatifs de la probabilité d'appartenance de ladite donnée d'entrée à la classe potentielle.

On note que les techniques de confidentialité différentielle jusque-là utilisées considéraient de très grosses structures pour pouvoir réaliser un mécanisme dit de « Laplace » sur les fréquences. Les algorithmes devaient incorporer une partie de programmation dynamique pour pouvoir fonctionner, et il aurait été impossible de les utiliser tel quel en classification.

Au contraire, le présent procédé propose dans une étape (b) la construction, à partir du premier vecteur, du deuxième vecteur de classification de ladite donnée d'entrée, tel que le deuxième vecteur appartienne également au premier espace de vecteurs possibles et présente une distance avec le premier vecteur selon une fonction de distance donnée égale à une distance de référence non-nulle.

Ici, il est important de comprend que la distance entre les deux vecteurs est égale à la distance de référence (notée d), et pas juste inférieure à un seuil. Ainsi, on n'est pas dans la seule recherche de vecteurs « proches » mais bien de vecteurs différents. Un vecteur égal ou trop similaire au premier vecteur ne peut pas être obtenu comme deuxième vecteur Cela permet comme on va le voir d'obtenir très facilement le deuxième vecteur, tout en garantissant un niveau de bruit minimum.

L'idée est que les scores du deuxième vecteur forment une autre composition de la valeur totale, et ainsi que l'ensemble des vecteurs pouvant constituer un deuxième vecteur acceptable est inclus dans le premier ensemble, dont on rappelle qu'il est fini et dénombrable. Il n'y a alors plus besoin d'aucun mécanisme complexe pour la construction du deuxième vecteur.

De nombreuse fonctions de distances peuvent être utilisées, notamment les normes L1, L2, L∞. Les normes L1 et L∞ sont très avantageuses, car si les vecteurs n'ont que des composantes entières, comme c'est présentement le cas, leur distance selon ces normes est également entière. On peut alors choisit la distance de référence d comme une valeur entière (strictement positive). De façon préférée, on choisit comme fonction de distance la norme L1, qui donne d'excellents résultats.

Si on reprend l'exemple dans lequel pour une donnée d'entrée, une 1$^e$ classe se voit attribuer 90 points, une 2$^e$ classe 0 points, et une 3$^e$ classe 10 points, le premier vecteur vaut (90,0,10). Si on choisit la norme L1 comme fonction de distance et une distance de référence $d = 5$, on pourra par exemple prendre comme deuxième vecteur (87,1,11). On constate que l'information de classification est identique : la donnée d'entrée est a priori de la 1$^e$ classe, et éventuellement de la 3$^e$ classe, tout en étant bruitée.

On va voir plusieurs façons de réaliser l'étape (b), mais en notant $o$ le premier vecteur et $\hat{o}$ le deuxième vecteur, on peut poser $\hat{o} = o + e$, avec $e = (e_1, e_2, \ldots, e_m)$ un troisième vecteur dit « vecteur d'erreur » (qui correspond à du bruit ajouté).

On remarque que :

- $$\sum_{i=1}^{m} e_i = 0 \quad , \quad \text{puisque}$$

$\sum_{i=1}^{m} o_i = \sum_{i=1}^{m} \hat{o}_i = l$ ; et

- $distance(e, 0) = distance(\hat{o}, o) = d,$ où « 0 » est le vecteur nul (tous les scores égaux à zéro).

L'ensemble des vecteurs d'erreur forment ainsi un ensemble (dit deuxième ensemble) fini et dénombrable de vecteurs d'erreur, chaque vecteur d'erreur du deuxième ensemble associant à chacune d'une pluralité de classes potentielles un score entier relatif tel qu'une somme desdits scores du vecteur d'erreur est nulle, et présentant une distance avec le vecteur nul selon la fonction de distance donnée égale à ladite distance de référence non-nulle.

On comprend que les vecteurs d'erreurs ne sont pas des vecteurs de classification, et présentent des valeurs qui sont des entiers « relatifs », c'est-à-dire possiblement négatives, appartenant à $\mathbb{Z}$.

En notant $E$ l'ensemble de tous les vecteurs d'erreurs et $E_d$ le deuxième ensemble, on constate que l'ensemble des $E_d$ (pour d allant de 1 à $2l$) forme une partition de $E$. Comme l'ensemble $E$ est dénombrable, on peut aisément l'ordonner, et a fortiori $E_d$ de sorte qu'un troisième vecteur peut y être choisi, notamment aléatoirement.

On procède avantageusement de la sorte :

- Dans une première sous-étape (b0), ledit deuxième ensemble est construit en fonction de ladite distance de référence. L'étape (b0) peut comprendre la sélection de ladite distance de référence $d$, notamment aléatoirement, en particulier en fonction de ladite valeur totale $l$ prédéfinie. Par exemple, on peut la choisir dans un intervalle donné, par exemple entre 1% et 50%, voire entre 2% et 20%, voire entre 5 et 10%, de la valeur totale $l$. A noter que $d$ peut alternativement être prédéfinie.
- Dans une deuxième sous-étape (b1), le troisième vecteur est sélectionné, en particulier aléatoirement, dans le deuxième ensemble.
- Enfin, dans une troisième sous-étape (b2), le deuxième vecteur est construit comme somme du premier vecteur et du troisième vecteur.

Le deuxième vecteur peut alors être renvoyé (i.e. publié) comme résultat de la classification. Le premier vecteur n'est pas dévoilé.

Malheureusement sur des données réelles un bruit uniforme n'est réaliste. Il y a corrélation entre les différentes coordonnées du premier vecteur et le bruit que l'on doit lui appliquer (le troisième vecteur) ne doit si possible pas être quelconque. Pour ce faire on propose avantageusement d'utiliser une base de données témoin, présentant une distribution réaliste et constituant une référence, en particulier une base de données réelle (i.e. constituée naturellement), de manière à générer un troisième vecteur qui est réaliste dans la zone de l'espace dans laquelle se situe le premier vecteur.

Alternativement à l'utilisation du deuxième ensemble de vecteurs d'erreur, on note qu'il reste possible de construire à l'étape (b) l'ensemble des vecteurs possibles présentant une distance avec le premier vecteur selon ladite fonction de distance donnée égale à la distance de référence non-nulle. On comprend en effet qu'il s'agit d'un sous-ensemble du premier ensemble, donc également fini et dénombrable.

On peut alors directement choisir, par exemple aléatoirement, un vecteur de ce sous-ensemble comme deuxième vecteur.

*Produit programme d'ordinateur*

Selon un deuxième et un troisième aspects, l'invention concerne un produit programme d'ordinateur comprenant des instructions de code pour l'exécution (en particulier sur les moyens de traitement de données 11a, 11b, 11c, 21 d'un ou plusieurs serveurs 1a, 1b, 1c ou du terminal 2) d'un procédé selon le premier aspect de l'invention de classification sécurisée d'une donnée d'entrée, ainsi que des moyens de stockage lisibles par un équipement informatique (une mémoire 12a, 12b, 12c, 22 d'un ou plusieurs serveurs 1a, 1b, 1c ou du terminal 2) sur lequel on trouve ce produit programme d'ordinateur.

## Revendications

1. Procédé de classification sécurisée d'une donnée biométrique d'entrée au moyen d'un réseau de neurones à convolution, CNN, le procédé comprenant la mise en œuvre par des moyens de traitement de données (11a, 11b, 11c, 21) d'au moins un équipement (1a, 1b, 1c, 2), d'étapes de :

   (a) Détermination, par application dudit CNN à ladite donnée biométrique d'entrée, d'un premier vecteur de classification de ladite donnée biométrique d'entrée associant à chacune d'une pluralité de classes potentielles un score entier représentatif de la probabilité d'appartenance de ladite donnée biométrique d'entrée à la classe potentielle, le premier vecteur correspondant à un vecteur possible parmi un premier ensemble fini et dénombrable de vecteurs possibles, chaque vecteur possible du premier ensemble associant à chacune de la pluralité de classes potentielles un score entier tel que lesdits scores du vecteur possible constituent une composition d'une valeur totale entière prédéfinie ;
   (b) Construction à partir du premier vecteur d'un deuxième vecteur de classification de ladite donnée biométrique d'entrée, tel que le deuxième vecteur appartienne également au premier espace de vecteurs possibles et présente une distance avec le premier vecteur selon une fonction de distance donnée égale à une distance de référence non-nulle ; et renvoi du deuxième vecteur comme résultat de la classification sécurisée.

2. Procédé selon la revendication 1, dans lequel lesdites données biométriques sont des images de visages.

3. Procédé selon l'une des revendications 1 et 2, étant un procédé d'authentification ou d'identification d'un individu, ladite donnée biométrique d'entrée étant acquise sur l'individu.

4. Procédé selon l'une des revendications 1 à 3, dans lequel l'étape (b) comprend une sous-étape (b1) de sélection d'un troisième vecteur dans un deuxième ensemble fini et dénombrable de vecteurs d'erreur, chaque vecteur d'erreur du deuxième ensemble associant à chacune d'une pluralité de classes potentielles un score entier relatif tel qu'une somme desdits scores du vecteur d'erreur est nulle, et présentant une distance avec le vecteur nul selon la fonction de distance donnée égale à ladite distance de référence non-nulle ; et une sous-étape (b2) de construction du deuxième vecteur comme somme du premier vecteur et du troisième vecteur.

5. Procédé selon la revendication 4, dans lequel l'étape (b) comprend une sous-étape préalable (b0) de construction dudit deuxième ensemble en fonction de ladite distance de référence.

6. Procédé selon la revendication 5, dans lequel l'étape (b0) comprend la sélection aléatoire de ladite distance de référence.

7. Procédé selon l'une des revendications 4 à 6, dans lequel la sélection dudit troisième vecteur dans le deuxième espace est aléatoire.

8. Procédé selon la revendication 7, dans lequel ladite sélection aléatoire dudit troisième vecteur n'est pas uniforme, et est mise en œuvre en fonction du premier vecteur en utilisant une base de données biométriques témoin de sorte à reproduire un bruit réaliste.

9. Procédé selon l'une des revendications 1 à 8, dans lequel ladite fonction de distance est la norme L1, ladite distance de référence étant entière.

10. Procédé selon l'une des revendications 1 à 9, comprenant une étape (a0) d'apprentissage, à partir d'une base de données biométriques confidentielles d'apprentissage déjà classifiées, des paramètres dudit CNN.

11. Produit programme d'ordinateur comprenant des instructions de code pour l'exécution d'un procédé selon l'une des revendications 1 à 10 de classification sécurisée d'une donnée biométrique d'entrée au moyen d'un réseau de neurones à convolution, lorsque ledit programme est exécuté par un ordinateur.

12. Moyen de stockage lisible par un équipement informatique sur lequel un produit programme d'ordinateur comprend des instructions de code pour l'exécution d'un procédé selon l'une des revendications 1 à 10 de classification sécurisée d'une donnée biométrique d'entrée au moyen d'un réseau de neurones à convolution.

**Patentansprüche**

1. Verfahren zur gesicherten Klassifizierung eines biometrischen Eingangsdatenelements mit Hilfe eines neuronalen Netzwerks mit Konvolution, CNN, wobei das Verfahren die Umsetzung, durch Datenverarbeitungsmittel (11a, 11b, 11c, 21) mindestens einer Ausrüstung (1a, 1b, 1c, 2), folgender Schritte beinhaltet:

   (a) Bestimmen, durch Anwendung des CNN auf das biometrische Eingangsdatenelement, eines ersten Klassifizierungsvektors für das biometrische Eingangsdatenelement, der jeder einer Vielzahl von potenziellen Klassen einen ganzzahligen Score zuordnet, der für die Wahrscheinlichkeit einer Zugehörigkeit des biometrischen Eingangsdatenelements zu der potenziellen Klasse repräsentativ ist, wobei der erste Vektor einem möglichen Vektor aus einer ersten endlichen und zählbaren Menge möglicher Vektoren entspricht, wobei jeder mögliche Vektor der ersten Menge jeder der Vielzahl von potenziellen Klassen einen ganzzahligen Score derart zuordnet, dass die Scores des möglichen Vektors eine Komposition eines vordefinierten ganzzahligen Gesamtwerts bilden;
   (b) Erstellen, anhand des ersten Vektors, eines zweiten Klassifizierungsvektors für das biometrische Eingangsdatenelement derart, dass der zweite Vektor auch zu dem ersten Raum möglicher Vektoren gehört und gemäß einer gegebenen Abstandsfunktion einen Abstand zu dem ersten Vektor aufweist, der gleich einem Referenzabstand ungleich null ist; und Bereitstellen des zweiten Vektors als Ergebnis der gesicherten Klassifizierung.

2. Verfahren nach Anspruch 1, wobei die biometrischen Daten Bilder von Gesichtern sind.

3. Verfahren nach einem der Ansprüche 1 und 2, das ein Verfahren zur Authentifizierung oder Identifizierung einer Person ist, wobei das biometrische Eingangsdatenelement an der Person erfasst wird.

4. Verfahren nach einem der Ansprüche 1 bis 3, wobei Schritt (b) Folgendes beinhaltet: einen Teilschritt (b1) des Auswählens eines dritten Vektors aus einer zweiten endlichen und zählbaren Menge von Fehlervektoren, wobei jeder Fehlervektor der zweiten Menge jeder einer Vielzahl von potenziellen Klassen einen relativen ganzzahligen Score derart zuordnet, dass eine Summe der Scores des Fehlervektors null ist, und gemäß der gegebenen Abstandsfunktion einen Abstand zu dem Null-Vektor aufweist, der gleich dem Referenzabstand ungleich null ist; und einen Teilschritt (b2) des Erstellens des zweiten Vektors als Summe aus dem ersten Vektor und dem dritten Vektor.

**5.** Verfahren nach Anspruch 4, wobei Schritt (b) einen Vorab-Teilschritt (b0) des Erstellens der zweiten Menge in Abhängigkeit von dem Referenzabstand beinhaltet.

**6.** Verfahren nach Anspruch 5, wobei Schritt (b0) das zufällige Auswählen des Referenzabstands beinhaltet.

**7.** Verfahren nach einem der Ansprüche 4 bis 6, wobei das Auswählen des dritten Vektors aus dem zweiten Raum zufällig ist.

**8.** Verfahren nach Anspruch 7, wobei das zufällige Auswählen des dritten Vektors nicht gleichmäßig ist und in Abhängigkeit von dem ersten Vektor unter Verwendung einer biometrischen Kontrolldatenbank umgesetzt wird, um ein realistisches Rauschen zu reproduzieren.

**9.** Verfahren nach einem der Ansprüche 1 bis 8, wobei die Abstandsfunktion die L1-Norm ist, wobei der Referenzabstand ganzzahlig ist.

**10.** Verfahren nach einem der Ansprüche 1 bis 9, beinhaltend einen Schritt (a0) des Lernens, anhand einer Datenbank mit bereits klassifizierten vertraulichen biometrischen Lerndaten, der Parameter des CNN.

**11.** Computerprogrammprodukt, das Codeanweisungen beinhaltet, die bei der Ausführung des Programms durch einen Computer ein Verfahren nach einem der Ansprüche 1 bis 10 zur gesicherten Klassifizierung eines biometrischen Eingangsdatenelements mit Hilfe eines neuronalen Netzwerks mit Konvolution ausführen.

**12.** Speichereinrichtung, die von einer EDV-Ausrüstung gelesen werden kann und auf der ein Computerprogrammprodukt Codeanweisungen zur Ausführung eines Verfahrens nach einem der Ansprüche 1 bis 10 zur gesicherten Klassifizierung eines biometrischen Eingangsdatenelements mit Hilfe eines neuronalen Netzwerks mit Konvolution beinhaltet.

**Claims**

**1.** Method for achieving secure classification of an input biometric datum by means of a CNN, CNN being the acronym of convolutional neural network, the method comprising implementation, by data-processing means (11a, 11b, 11c, 21) of at least one piece of equipment (1a, 1b, 1c, 2), of steps of:

(a) determining, by applying said CNN to said input biometric datum, a first classification vector of said input biometric datum associating with each of a plurality of potential classes an integer score representative of the probability of said input biometric datum belonging to the potential class, the first vector corresponding to one possible vector among a first finite and countable set of possible vectors, each possible vector of the first set associating with each of the plurality of potential classes an integer score such that said scores of the possible vector form a composition of a predefined integer total value;
(b) constructing, from the first vector, a second classification vector of said input biometric datum, such that the second vector also belongs to the first space of possible vectors and has a distance to the first vector according to a given distance function equal to a non-zero reference distance; and returning the second vector as result of the secure classification.

**2.** Method according to Claim 1, wherein said biometric data are images of faces.

**3.** Method according to either of Claims 1 and 2, being a method for authenticating or identifying an individual, said input biometric datum being acquired from the individual.

**4.** Method according to any of Claims 1 to 3, wherein step (b) comprises a substep (b1) of selecting a third vector from a second finite and countable set of error vectors, each error vector of the second set associating with each of a plurality of potential classes a relative integer score such that a sum of said scores of the error vector is zero, and having a distance to the zero vector according to the given distance function equal to said non-zero reference distance; and a substep (b2) of constructing the second vector by summing the first vector and the third vector.

**5.** Method according to Claim 4, wherein step (b) comprises a prior substep (b0) of constructing said second set depending on said reference distance.

**6.** Method according to Claim 5, wherein step (b0) comprises random selection of said reference distance.

7. Method according to any of Claims 4 to 6, wherein selection of said third vector in the second space is random.

8. Method according to Claim 7, wherein said random selection of said third vector is non-uniform and is implemented depending on the first vector using a control biometric database, so to reproduce realistic noise.

9. Method according to one of Claims 1 to 8, wherein said distance function is the L1 norm, said reference distance being integer.

10. Method according to any of Claims 1 to 9, comprising a step (a0) of learning, from a database of already classified confidential biometric learning data, the parameters of said CNN.

11. Computer program product comprising code instructions for executing a method according to any of Claims 1 to 10 for achieving secure classification of an input biometric datum by means of a convolutional neural network, when said program is executed by a computer.

12. Storage means readable by a piece of computer equipment, on which a computer program product comprises code instructions for executing a method according to any of Claims 1 to 10 for achieving secure classification of an input biometric datum by means of a convolutional neural network.

**FIG. 1**

(a0)  Base de données
confidentielles

Apprentissage
CNN

(a)  Détermination du premier vecteur par
application du CNN

(b0)  Sélection de la distance de référence
Construction du deuxième ensemble

(b1)  Sélection du troisième vecteur
dans le deuxième ensemble

(b2)  Construction du deuxième vecteur
(somme des premier et troisième vecteurs)

**FIG. 2**

## RÉFÉRENCES CITÉES DANS LA DESCRIPTION

**Documents brevets cités dans la description**

- FR 1852351

**Littérature non-brevet citée dans la description**

- Calibrating Noise to Sensitivity in Private Data Analysis. **DWORK CYNTHIA et al.** INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER. SPRINGER, 04 March 2006, 265-284

- **GEOFFREY HINTON ; ORIOL VINYALS, ; JEFF DEAN**. Distilling the Knowledge in a Neural Network. *NIPS 2014*
- **SILVIA HEUBACH ; TOUFIK MANSOUR**. *Compositions of n with parts in a set*
- *Differentially Private Password Frequency Lists,*, 2016, https://eprint.iacr.org/2016/153.pdf